(19) Europäisches Patentamt
European Patent Office
Office européen des brevets

(11) Veröffentlichungsnummer: **0 008 366**
**B1**

(12) # EUROPÄISCHE PATENTSCHRIFT

(45) Veröffentlichungstag der Patentschrift: **27.10.82**

(51) Int. Cl.³: **C 07 F 9/12**

(21) Anmeldenummer: **79102518.2**

(22) Anmeldetag: **18.07.79**

(54) **Verfahren zur Herstellung neutraler Phosphorsäureester nach dem Phasengrenzflächenverfahren und nach diesem Verfahren hergestellte Verbindungen.**

(30) Priorität: **29.07.78 DE 2833342**

(43) Veröffentlichungstag der Anmeldung: **05.03.80 Patentblatt 80/5**

(45) Bekanntmachung des Hinweises auf die Patenterteilung: **27.10.82 Patentblatt 82/43**

(84) Benannte Vertragsstaaten: **BE DE FR GB IT NL**

(56) Entgegenhaltungen:
**DE-A-1 693 204**
**DE-A-2 162 344**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Hucks, Uwe, Ing., Am Marienstift 30, D-4234 Alpen (DE)**
Erfinder: **Wulff, Claus, Dr., Kaiser Strasse 248, D-4150 Krefeld 1 (DE)**
Erfinder: **Tresper, Erhard, Dr., Dahlerdyk 154, D-4150 Krefeld 1 (DE)**
Erfinder: **Vernaleken, Hugo, Dr., Kreuzbergstrasse 147, D-4150 Krefeld (DE)**
Erfinder: **Selbeck, Harald, Dr., Doerperhofstrasse 39, D-4150 Krefeld (DE)**

**EP 0 008 366 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung neutraler Phosphorsäureester nach dem Phasengrenzflächenverfahren und nach diesem Verfahren hergestellte Verbindungen

Gegenstand der Erfindung ist ein Verfahren zur Herstellung neutraler Phosphorsäureester durch Umsetzung von Phosphoroxyhalogeniden, Phosphorpentahalogeniden, Phosphorsäuremonoesterdihalogeniden oder Phosphorsäurediesterhalogeniden mit Hydroxyarylverbindungen in Gegenwart wäßriger Erdalkali- und/oder Alkalihydroxydlösungen und organischem, mit Wasser nicht mischbarer Lösungsmittel nach der Methode der Phasengrenzflächenkondensation.

Es ist bekannt, daß großtechnisch neutrale Phosphorsäurearylester durch Umsetzung von Hydroxyarylverbindungen, gegebenenfalls in Lösungsmitteln, oft in Gegenwart von Katalysatoren mit beispielsweise Phosphoroxychlorid in wasserfreiem Medium unter Freisetzen von Chlorwasserstoffgas hergestellt werden. Von Nachteil sind die oft hohen Temperaturen, bei denen die Reaktionen durchgeführt werden müssen und die insbesondere gegen Ende der Reaktion notwendig sind, um das gebildete Chlorwasserstoffgas weitgehend abzutreiben. Dadurch wird die Bildung von Nebenprodukten gefördert und die Produktfarbe verschlechtert. Für die Gewinnung reiner Produkte sind technisch aufwendige Reinigungsoperationen, wie Destillationen der teilweise hochsiedenden Ester unter Vakuum oder Umkristallisation der Ester in geeigneten Lösungsmitteln notwendig.

Ein besonderer Nachteil ist die Bildung von Chlorwasserstoffgas. Wegen der dadurch hervorgerufenen Korrosion werden an die Materialien der Anlagen, in denen die Ester hergestellt werden, hohe Anforderungen gestellt. Zudem müssen spezielle Vorrichtungen vorhanden sein, in denen das gebildete Chlorwasserstoffgas aufgefangen und beispielsweise von Wasser absorbiert wird.

Es besteht daher ein Bedürfnis, die genannten Nachteile bei der technischen Herstellung von neutralen Phosphorsäurearylestern zu überwinden.

Aus der DE-A-1 693 204 ist es bekannt, Phosphorsäureester aus Phosphorsäureesterhalogeniden und Phenolen in Gegenwart einer Base als Säureakzeptor und ggf. in einem organischen Lösungsmittel herzustellen. Das Verfahren hat den Nachteil, daß es auf die Umsetzung von Monohalogen-phosphorsäureestern beschränkt ist.

Aus der DE-A-2 162 344 ist ein Verfahren zur Herstellung von Phosphorsäureestern bekannt, bei dem Phenole oder Phenolate mit Phosphorsäureesterhalogeniden in einem Medium umgesetzt werden, das aus einem Sauerstoff enthaltenden organischen Lösungsmittel, einem Amin als Katalysator und einer basischen Metallverbindung besteht und ggf. noch Wasser enthalten kann. Auch dieses Verfahren hat den Nachteil, daß es auf die Umsetzung von Monohalogen-phosphorsäureestern beschränkt ist.

Seit langem ist bekannt, daß unter anderem neutrale Phosphorsäurearylester durch Umsetzung von Phosphoroxychlorid mit Hydroxyarylverbindungen in Gegenwart von wäßrigen Alkalihydroxydlösungen bei niedrigen Temperaturen nach der Methode von Schotten-Baumann hergestellt werden können [W. Autenrieth, Ber. Deutsche chem. Gesellsch. 30, 2372 (1908)].

Die bekannten Nachteile der Reaktion nach Schotten-Bauman liegen in der gleichzeitig als Nebenreaktion ablaufenden Verseifung der Säurechloride durch die vorhandenen wäßrigen Alkalihydroxydlösungen zu den Alkalisalzen der den Säurechloriden zugrundeliegenden Säuren. Die so gebildeten Alkalisalze der Säuren reagieren unter den Reaktionsbedingungen nicht mehr mit den Hydroxyarylverbindungen, so daß die Methode nach Schotten-Bauman nur in speziellen Fällen nahezu quantitative Ausbeuten liefert.

Die Säurechloride mehrbasiger Säuren können nun auf jeder Stufe des Reaktionsablaufs dieser Nebenreaktion unterliegen. Deshalb werden bei der Verwendung von di- oder tribasigen Säurehalogeniden in der Regel keine guten Ausbeuten an neutralen Estern erhalten.

Die von Autenrieth nicht zahlenmäßig quantifizierten »guten« Ausbeuten an neutralen Phosphorsäurearylestern sind daher unter diesem Gesichtspunkt zu sehen. Eine Nacharbeitung seiner Herstellungsvorschrift führte zu Ausbeuten, die in keinem Fall 60% überstiegen (Vergleichsbeispiel 1).

Einen weiteren ausbeutemindernden Nachteil beschreibt die US-PS 1 837 176. Dort wird festgestellt, daß bei der Herstellung von Triphenylphosphat nach der Methode von Schotten-Baumann Diphenylphosphorsäurechlorid sich in fester Form abscheidet und daher kaum an der weiteren Reaktion teilnimmt. Dieser Nachteil wird durch Zugabe einer solch geringen Menge eines geeigneten organischen Lösungsmittels als Reaktionsvermittler überwunden, daß sich der neutrale Phosphorsäurephenylester bei den angegebenen Reaktionstemperaturen von 0—3°C noch fest abscheiden kann. Die Menge des verwendeten Lösungsmittels beträgt weniger als 10 Gew.-% der theoretisch möglichen Triphenylphosphat-Menge. Darüber hinaus versucht man die Verseifungsreaktion dadurch zu kontrollieren, daß kein Alkaliüberschuß angewendet wird. Eine Nacharbeitung der Herstellungsvorschrift führte nur zu Ausbeuten bis zu 75% (Vergleichsbeispiel 2).

Überraschend wurde nun gefunden, daß Phosphoroxyhalogenide, Phosphorpentahalogenide, Phosphorsäuremonoesterdihalogenide oder Phosphorsäurediesterhalogenide bei der Umsetzung mit Hydroxyarylverbindungen in Gegenwart wäßriger Erdalkali- und/oder Alkalihydroxydlösungen in nahezu quantitativen Ausbeuten neutrale Ester bilden, wenn ein organisches Lösungsmittel und ein Überschuß der Hydroxyarylverbindung und des Erdalkali- und/oder Alkalihydroxyds verwendet wird.

Dies ist um so überraschender, als nach dem vorher Gesagten eine partielle Verseifung des Phosphoroxyhalogenids durch die Gegenwart von überschüssigen Erdalkali- und/oder Alkalihydroxydmengen beschleunigt werden sollte.

Gegenstand der Erfindung ist somit ein Verfahren zur Herstellung neutraler Phosphorsäurreester der allgemeinen Formel (I)

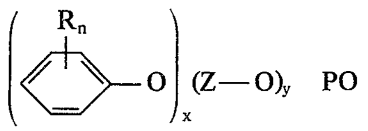

(I)

in der

R für ein Wasserstoffatom, einen Alkylrest mit 1—20, bevorzugt 1—4 Kohlenstoffatomen, einen Alkoxyrest mit 1—20, bevorzugt 1—4 Kohlenstoffatomen, einen Phenoxyrest, einen Phenylrest der gegebenenfalls annelliert ist, ein bicyclisches annelliertes aromatisches Ringsystem, das durch ein Heteroatom wie Stickstoff unterbrochen ist, eine Nitrilgruppe oder ein Halogenatom (Cl, Br, F) steht,

n für eine ganze Zahl von 1 bis 5 steht und die Reste R gleich oder verschieden sein können,

x für eine ganze Zahl von 2 bis 3 steht,

Z für einen Alkylrest mit 1—20 Kohlenstoffatomen oder einen Rest der Formel

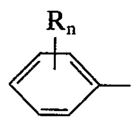

worin

R und n die obige Bedeutung aufweisen und

Y für die Zahl 3—x,

durch Umsetzung von Phosphoroxyhalogeniden, Phosphorpentahalogeniden oder Phosphorsäuremonoesterdihalogeniden der Formel (II) bzw. (III)

$$ZOPOHal_2 \qquad (II)$$

in denen Z die bereits angegebene Bedeutung besitzt und Hal Cl und/oder Br darstellt mit Hydroxyarylverbindungen der allgemeinen Formel (IV)

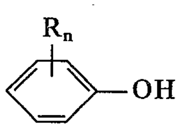

(IV)

mit den für R und n angegebenen Bedeutungen oder deren Mischungen in einem zweiphasigen Gemisch aus einem organischen Lösungsmittel und wäßriger Erdalkali- und/oder Alkalihydroxydlösung, das dadurch gekennzeichnet ist, daß man bezogen auf die Phosphorhalogenidverbindung einen Überschuß an Hydroxyarylverbindung und einen Überschuß an Erdalkali- und/oder Alkalihydroxid einsetzt, wobei ein organisches Lösungsmittel in solchen Mengen anwesend ist, daß 10 bis 50 gew.-%ige Lösungen des neutralen Phosphorsäureesters entstehen, und man nach Umsetzung die organische Phase abtrennt und den entstandenen Phosphorsäureester durch Entfernung des Lösungsmittels isoliert.

Als Phosphoroxyhalogenid wird bei dem erfindungsgemäßen Verfahren bevorzugt Phosphoroxychlorid eingesetzt. Auch die Verwendung von Phosphorpentahalogeniden, bevorzugt Phosphorpentachlorid, ist möglich. Weiter einsetzbar in das erfindungsgemäße Verfahren sind auch Phosphorsäuremonoesterdihalogenide, wie sie beispielsweise durch Reaktion von Phosphoroxyhalogeniden mit einem Unterschuß organischer Hydroxyverbindungen erhalten werden können. Als Beispiele dieser literaturbekannten Verbindungen seien genannt: Phosphorsäuremonoäthylesterdichlorid und Phosphorsäuremono-2-äthylhexylesterdichlorid.

Reaktionspartner für die genannten Phosphorverbindungen sind nach dem erfindunggemäßen Verfahren Hydroxyarylverbindungen der allgemeinen Formel (V)

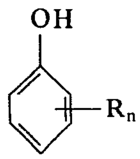

(V)

in der

R für ein Wasserstoffatom, einen Alkylrest mit 1—20, bevorzugt 1—4 Kohlenstoffatomen, einen Alkoxyrest mit 1—20, bevorzugt 1—4 Kohlenstoffatomen, einen Phenoxyrest, einen Phenylrest, der gegebenenfalls annelliert ist, ein bicyclisches, aromatisches Ringsystem das durch ein Heteroatom wie Stickstoff unterbrochen ist, eine Nitrilgruppe oder ein Halogenatom (Cl, Br, F) steht und

n für eine ganze Zahl zwischen 1 und 5 steht und die Reste R gleich oder verschieden sein können.

Diese Verbindungen können allein oder auch in beliebigen Mischungen miteinander in das erfindungsgemäße Verfahren eingesetzt werden.

Geeignete Verbindungen sind beispielsweise: Phenol, o-, m- und p-Kresol, o-, m- und p-Isopropylphenol, o-, m- und p- sek.-Butylphenol, o-, m- und p-tert.-Butylphenol, o-, m- und p-n-Nonylphenol, 2-Äthoxyphenol, 4-Phenoxyphenol, 4-Phenylphenol, o- und p-Chlorphenol, o- und p-Bromphenol, Tribromphenol, α-Naphthol oder 8-Hydroxychinolin. Die o-, m- und p-Verbindungen können allein oder in beliebiger Mischung miteinander verwendet werden.

Bei der Umsetzung liegt ein Überschuß der Hydroxyarylverbindung vor, insbesondere werden 1,01—4 Mol, vorzugsweise 1,02—1,5 Mol pro Äquivalent Phosphorhalogenidverbindung verwendet.

Als Lösungsmittel und/oder Verdünnungsmittel werden bei der erfindungsgemäß durchgeführten Reaktion unter den Reaktionsbedingungen inerte organische Verbindungen verwendet, die mit Wasser nicht mischbar sind. Als Beispiele seien genannt: Benzol, Toluol, Xylol und halogenierte Kohlenwasserstoffe, wie z. B. Chlorbenzol, Methylenchlorid und 1,2-Dichloräthan.

Bei einer besonders vorteilhaften Ausführungsform des erfindungsgemäße Verfahrens werden die Hydroxyarylverbindungen, die an der Reaktion teilnehmen oder die bei der Reaktion entstehenden Ester als Lösungsmittel verwendet. Voraussetzung hierfür ist, daß die Schmelz- oder Stockpunkte dieser Verbindungen unterhalb der Reaktionstemperatur liegen.

Die Lösungsmittel werden in solchen Mengen eingesetzt, daß vorzugsweise 15 bis 30 gew.-%ige Lösungen der neutralen Phosphorsäureester in den verwendeten Lösungsmitteln entstehen.

Als wäßrige Erdalkali- und/oder Alkalihydroxydlösungen können Lithium-, Natrium, Kaliumhydroxyd, Calciumhydroxid oder Ammoniumhydroxidlösungen verwendet werden. Bevorzugt werden Alkalihydroxidlösungen eingesetzt. Besonders bevorzugt wird nach dem erfindungsgemäßen Verfahren eine wäßrige Natriumhydroxydlösung verwendet.

Die Erdalkali- und/oder Alkalihydroxydmenge beträgt 1,01—2 Mol, vorzugsweise 1,01—1,25 Mol pro Äquivalent Phosphorhalogenidverbindungen. Die Gehalte der wäßrigen Erdalkali- und/oder Alkalihydroxydlösungen an reinem Erdalkali- und/oder Alkalihydroxyd können stark unterschiedlich sein, vorzugsweise werden Konzentrationen zwischen 10 und 60 Gew.-% besonders bevorzugt zwischen 25—53 Gew.-% gewählt. Während der gesamten Umsetzung liegt der pH-Wert zwischen 8 und 14 und ist abhängig von der Acidität der verwendeten Hydroxyarylverbindung und des Erdalkali- und/oder Alkalihydroxydüberschusses.

Die Verwendung hoher Erdalkali- und/oder Alkalihydroxydkonzentrationen stellt eine besondere Ausführungsform des erfindungsgemäßen Verfahrens dar. Das während der Reaktion entstehende Erdalkali- und/oder Alkalihalogenid scheidet sich nach Erreichen der Sättigungsgrenze in fester Form ab und kann nach beendeter Reaktion nach bekannten Verfahren, beispielsweise über Drehfilter, Schälzentrifugen oder ähnlichen Apparaten, abgetrennt werden. Eine Vermehrung der wäßrigen Reaktionsphase durch gesättigte Erdalkali- und/oder Alkalihalogenidlösung, zweckmäßigerweise der wäßrigen Reaktionsphase, die nach Abtrennen des Erdalkali- und/oder Alkalihalogenids und der organischen Phase erhalten wird, kann die Umsetzung günstig beeinflussen.

Durch diese Verfahrensvariante wird die Belastung der Abwässer mit Erdalkali- und/oder Alkalihalogeniden erheblich vermindert.

Es hat sich gezeigt, daß die Reaktion in der Regel ohne Katalysatoren mit ausreichender Ausbeute und genügender Geschwindigkeit abläuft. Als Katalysatoren, die insbesondere die Reaktionsgeschwindigkeit erhöhen, kommen tert. Amine, quaternäre Ammonium-, Phosphonium- und Sulfoniumverbindungen, wie z. B. Triäthylamin, n-Tributylamin oder Tetramethylammoniumhydroxyd in Frage. Die Katalysatorkonzentration kann in weiten Bereichen variiert werden, vorzugsweise verwendet man 0 bis 0,1 Mol Katalysator pro Mol eingesetzte Hydroxyarylverbindung.

Besonders gute Ausbeuten an neutralen Estern erhält man, wenn man bei Temperaturen zwischen 5 und 95° C, vorzugsweise 25 und 50° C arbeitet.

Die Reaktionszeiten betragen, je nach Reaktionsführung und Temperatur, bei der die Umsetzung

durchgeführt wird, 5 bis 90 Minuten und können durch Verwendung von Katalysatoren verkürzt werden.

Das erfindungsgemäße Verfahren kann man in der Weise durchführen, daß man die Hydroxyarylverbindung mit der Erdalkali- und/oder Alkalihydroxydlösung, gegebenenfalls unter Wasserzugabe oder Zugabe gesättigter Erdalkali- und/oder Alkalihalogenidlösung in einem kühlbaren Rührkessel mischt und unter heftigem Rühren mit dem im organischen Lösungsmittel gelösten Phosphoroxyhalogenid, Phosphorpentahalogenid oder Phosphorsäuremonoesterdihalogenid mit solcher Geschwindigkeit vereinigt, daß die Temperatur durch Kühlen gesteuert werden kann.

Die Aufarbeitung des Reaktionsgemisches erfolgt nach beendeter Umsetzung in bekannter Weise. So wird die Reaktionsemulsion, gegebenenfalls durch Filtration von ausgeschiedenen Erdalkali- und/oder Alkalihalogeniden befreit, getrennt und die organische Phase in z. B. Mischer-Scheider-Apparaten oder Separatoren mit Säure und danach mit Wasser elektrolytfrei gewaschen. Das Lösungsmittel wird abdestilliert. Der verbleibende Rückstand kann einer weiteren Reinigung, etwa durch Destillation oder Kristallisation, unterzogen werden. Ein besonderer Vorteil des erfindungsgemäßen Verfahrens besteht jedoch darin, daß bei Verwendung reiner Ausgangsverbindungen und Arbeiten unter inerter Atmosphäre während des gesamten Herstellungsprozesses des Phosphorsäureesters das Abdampfen des Lösungsmittels genügt, da als Rückstände die reinen, farbhellen Ester anfallen.

Für die kontinuierliche Durchführung des erfindungsgemäßen Verfahrens sind die technischen Apparate bekannt. Nach einer besonderen Ausführungsform werden die Lösung, Emulsion oder Suspension der Hydroxyarylverbindung in wäßriger Erdalkali- und/oder Alkalihydroxidlösung und die Lösung des Phosphoroxyhalogenids, Phosphorpentahalogenids, Phosphorsäuremonoesterdihalogenids oder Phosphorsäurediesterhalogenids in dem verwendeten Lösungsmittel kontinuierlich in einen Schlaufenreaktor eingespeist und miteinander umgesetzt. Der Schlaufenreaktor besteht aus einer Rohrschleife mit Wärmetauscher, einer Kreiselpumpe zum Mischen und Umpumpen des Reaktionsgemisches und Dosiereinrichtungen für die Reaktanten. Über einen Ablaufstutzen läuft die Reaktionsemulsion, gegebenenfalls -suspension einer Pumpe zu, die das Reaktionsgemisch durch ein Strömungsrohr, in dem die Umsetzung abgeschlossen wird, fördert. Das Strömungsrohr ist in der DE-C-1 920 302 und in der US-A-3 674 740 beschrieben.

Es besteht aus einer alternierenden Folge von Verweilzeitabschnitten größerer Rohrinnenweite und Mischabschnitten geringerer Rohrinnenweite, wobei letztere Reynoldzahlen von größer als 2000 gewährleisten.

Vorteilhaft ist eine Kombination von mindestens drei Verweilzeit- und drei Mischabschnitten. Nach einer besonderen Ausführungsform variieren die Verhältnisse der Rohrdurchmesser der Verweilzeitabschnitte zu den Mischabschnitten zwischen 3 und 50 und deren Längenverhältnis zwischen 1 und 50.

Die Rohrdurchmesser der Mischabschnitte werden so groß gewählt, daß Strömungsgeschwindigkeiten in diesen Abschnitten Reynoldzahlen von mindestens größer als 2000, jedoch vorzugsweise größer als 2300, entsprechen. Während des Durchströmens der Mischrohre bildet sich eine stabile Emulsion. Das Volumen der anschließenden Verweilzeitrohre und die somit hier herrschende Strömungsgeschwindigkeit werden durch die Wahl der Durchmesser dieser Rohre so bemessen, daß keine Entmischungen eintreten und daß ein optimaler Stoffaustausch stattfindet.

Nach einer anderen bevorzugten Ausführungsform wird die Reaktion in einer Rührkesselkaskade durchgeführt.

Die Verweilzeiten betragen für die Kombination Schlaufenreaktor/Strömungsrohr 5 bis 30 Minuten, für die Kaskade 15 bis 60 Minuten.

Die erfindungsgemäß hergestellten neutralen Phosphorsäureester werden als Weichmacher, schwerentflammbare Hydrauliköle und Additive für Mineralölprodukte verwendet.

### Beispiel 1

In einem Dreihalskolben mit Rührer, Tropftrichter und Thermometer werden 169,4 g Phenol mit 50 ml Toluol, 240 g Wasser und 155,5 g 45%iger Natronlauge vorgelegt. Unter heftigem Rühren wird innerhalb von 20 Minuten eine Lösung aus 76,7 g Phosphoroxychlorid und 250 ml Toluol zugetropft. Die Temperatur wird durch Kühlen zwischen 25 und 30°C gehalten. Es wird 30 Minuten bei 30°C nachgerührt. Die Phasen werden getrennt. Die organische Schicht wird 1mal mit 5%iger Phosphorsäure und 3mal mit Wasser gewaschen. Das Toluol wird abdestilliert und der Rückstand im Hochvakuum fraktioniert. Bei 188—190°C und 0,6 Torr werden 160,2 g reines Produkt erhalten. Die Ausbeute beträgt 98,2% der Theorie.

### Beispiele 2 bis 7

Diese wurden, wie in Beispiel beschrieben, durchgeführt. Die wichtigsten Parameter und die Ergebnisse sind in nachstehender Tabelle zusammengefaßt.

| Beispiel | mol Hydroxyarylverbindung pro mol Phosphoroxychlorid | mol NaOH pro mol Phosphoroxychlorid | % Ester in Toluollösung | Ausbeute % d. Th. |
|---|---|---|---|---|
| 2 | 3,6 mol m, p-Kresol (Kresol 70) | 3,5 mol | 43 | 97,9 |
| 3 | 4,5 mol m, p-Kresol | 4,0 mol | 44 | 98,9 |
| 4 | 3,6 mol p-Chlorphenol | 3,5 mol | 31 | 98,2 |
| 5 | 3,6 mol Tribromphenol | 3,5 mol | 35 | 92,1[+1]) |
| 6 | 3,6 mol α-Naphthol | 3,5 mol | 33 | 93,4[+1]) |
| 7 | 2,4 mol Phenol[+3]) | 2,33 mol[+3]) | 32 | 96,7[+2]) |

[+1]) Isolierung durch Kristallisation aus Toluol.
[+2]) Alkaliwäsche, Rückstand nach Ausdampfen des Toluols.
[+3]) Jeweils pro mol Phosphorsäuremono-2-äthylhexylesterdichlorid.

### Beispiel 8

In einen Schlaufenreaktor mit Wärmetauscher werden

1. 22,5 kg/h einer Lösung aus
   6,77 kg Phenol
   5,44 kg 50%iger Natronlauge und
   10,29 kg Wasser und

2. 18,57 kg/h einer Lösung aus
   3,07 kg Phosphoroxychlorid und
   15,5 kg Toluol

eingepumpt.
Die Reaktionstemperatur beträgt 27° C, die mittlere Verweilzeit 11,5 Minuten.

Nach Verlassen des Reaktors wird das Reaktionsgemisch durch ein Strömungsrohr gepumpt. Die Temperatur wird auf 36° C eingestellt. Die mittlere Verweilzeit beträgt 8 min.

Die Phasen werden in einem Trennbehälter getrennt. Die organische Lösung wird in Separatoren einmal mit verd. Natronlauge, einmal mit verd. Phosphorsäure und 2mal mit Wasser gewaschen. Nach dem Abdestillieren des Toluols in einem Dünnschichtverdampfer werden 6,41 kg/h Phosphorsäuretriphenylester erhalten. Das sind 98,2% der Theorie.

### Vergleichsbeispiel 1

In einem Kolben mit Rührer und Thermometer werden 141 g Phenol in 600 g 10%iger Natronlauge gelöst. Unter kräftigem Rühren werden unter Kühlen bei 20° C 84,3 g Phosphoroxychlorid innerhalb von 13 Minuten eingetragen. Gegen Ende des Zutropfens wird 10%ige Natronlauge zugegeben, um den pH-Wert über 13 zu halten. Es wird 40 Minuten nachgerührt. Danach wird der organische Teil in Äther aufgenommen. Der Äther wird abdestilliert und der Rückstand aus Alkohol umkristallisiert. Es werden nach dem Trocknen im Trockenschrank 96,7 g Produkt ausgewogen. Der Schmelzpunkt beträgt 49° C. Die Ausbeute entspricht 59,3% der Theorie.

### Vergleichsbeispiel 2

In einem Kolben mit Rührer und Thermometer werden 120 g Natriumhydroxyd in 390 g Wasser gelöst. Danach werden bei Raumtemperatur 282 g Phenol und 30 g Xylol eingetragen. Die Mischung wird auf 0–3° C abgekühlt. Jetzt werden innerhalb von 18 Minuten 153 g Phosphoroxychlorid zugetropft. Nach 3stündigem Rühren bei 0–3° C wird filtriert. Der Feststoff wird in Xylol aufgenommen

und durch Abdampfen des Xylols werden nach Abkühlen der Lösung 188 g Ester in reiner Form isoliert (Schmelzpunkt 49,3°C). In der Mutterlauge werden nach Aufarbeitung weitere 28 g Ester gefunden. Die Gesamtausbeute beträgt somit 66,3% d. Th.

**Patentansprüche**

1. Verfahren zur Herstellung neutraler Phosphorsäureester der allgemeinen Formel (I)

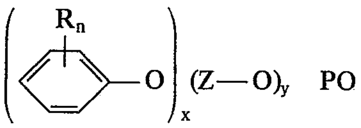

(I)

in der

R für ein Wasserstoffatom, einen Alkylrest mit 1–20, einen Alkoxyrest mit 1–20 Kohlenstoffatomen, einen Phenoxyrest, einen Phenylrest, der gegebenenfalls annelliert ist, ein bicyclisches annelliertes aromatisches Ringsystem, das durch ein Heteroatom unterbrochen ist, eine Nitrilgruppe oder ein Halogenatom steht,
n für eine ganze Zahl von 1 bis 5 steht und die Reste R gleich oder verschieden sein können,
x für eine ganze Zahl von 2 bis 3 steht,
Z für einen Alkylrest mit 1–20 Kohlenstoffatomen oder einen Rest der Formel

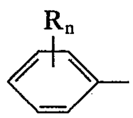

worin R und n die obige Bedeutung aufweisen
und
Y für 1 steht, wenn x für 2 steht und für 0 steht, wenn x für 3 steht,

durch Umsetzung von Phosphoroxyhalogeniden, Phosphorpentahalogeniden oder Phosphorsäuremonoesterdihalogeniden der Formel (II)

$ZOPOHal_2$ (II)

in denen Z die bereits angegebene Bedeutung besitzt und Hal Cl und/oder Br darstellt mit Hydroxyarylverbindungen der allgemeinen Formel (IV)

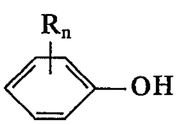

(IV)

mit den für R und n angegebenen Bedeutungen oder deren Mischungen in einem zweiphasigen Gemisch aus einem organischen Lösungsmittel und wäßriger Erdalkali- und/oder Alkalihydroxydlösung, dadurch gekennzeichnet, daß man bezogen auf die Phosphorhalogenidverbindung einen Überschuß an Hydroxyarylverbindung und einen Überschuß an Erdalkali- und/oder Alkalihydroxid einsetzt, wobei ein organisches Lösungsmittel in solchen Mengen anwesend ist, daß 10- bis 50gew.-%ige Lösungen des neutralen Phosphorsäureesters entstehen, und man nach Umsetzung die organische Phase abtrennt und den entstandenen Phosphorsäureester durch Entfernung des Lösungsmittels isoliert.

2. Verfahren nach Anspruch 1, dadurch gekennzeichnet, daß die Umsetzung bei Temperaturen zwischen 5 und 95°C durchgeführt wird.

3. Verfahren nach Anspruch 1, dadurch gekennzeichnet, daß die Umsetzung bei Temperaturen zwischen 25–50°C durchgeführt wird.

4. Verfahren nach Ansprüchen 1–3, dadurch gekennzeichnet, daß die Umsetzung mit einem Überschuß an Hydroxyarylverbindung von 1,01 bis 4 Mol pro Äquivalent Phosphorverbindung durchgeführt wird.

5. Verfahren nach Anspruch 1 bis 4, dadurch gekennzeichnet, daß die Umsetzung mit einem Überschuß an Erdalkali- und/oder Alkalihydroxyd von 1,01 bis 2 Mol pro Äquivalent Phosphorhalogenverbindung durchgeführt wird.

6. Verfahren nach Anspruch 1 bis 5, dadurch gekennzeichnet, daß als Phosphorsäurehalogenide

Phosphoroxychlorid oder 2-Äthylhexylphosphorsäuredichlorid eingesetzt wird.

7. Verfahren nach Anspruch 1 bis 6, dadurch gekennzeichnet, daß als Alkalihydroxydlösung wäßrige Natriumhydroxydlösung mit Konzentrationen zwischen 10 und 60 Gew.-% eingesetzt wird.

8. Verfahren nach Anspruch 1 bis 7, dadurch gekennzeichnet, daß als organische Lösungsmittel Toluol, Chlorbenzol und/oder Methylenchlorid eingesetzt wird.

9. Verfahren nach Anspruch 1 bis 8, dadurch gekennzeichnet, daß die Umsetzung kontinuierlich in einer Kombination aus Schlaufenreaktor und Strömungsrohr durchgeführt wird.

10. Neutrale Phosphorsäureester, hergestellt nach einem Verfahren der Ansprüche 1 bis 9.

## Claims

1. A process for the production of neutral phosphoric acid esters of the general formula (I)

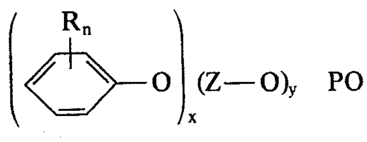

(I)

wherein

R represents a hydrogen atom, an alkyl radical containing from 1 to 20 carbon atoms, an alkoxy radical containing from 1 to 20 carbon atoms, a phenoxy radical, an optionally fused phenyl radical, a bicyclic fused aromatic ring system interrupted by a hetero atom, a nitrile group or a halogen atom,
n represents an integer of from 1 to 5 and the radicals R may be the same or different,
x represents an integer of from 2 to 3,
Z represents an alkyl radical containing from 1 to 20 carbon atoms or a radical of the formula

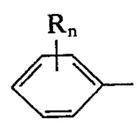

wherein

R and n are defined as above, and
y represents the number 1 where x=2,
and the number 0 where x=3,
by reacting phosphorus oxyhalides, phosphorus pentahalides or phosphoric acid monoester dihalides of the formula (II)

$$ZOPOHal_2 \quad (II)$$

wherein

Z is defined as above and Hal represents Cl and/or Br, with hydroxyaryl compounds of the general formula IV

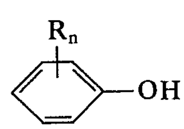

(IV)

wherein

R and n are defined as above,
or mixtures thereof in a two-phase mixture of an organic solvent and aqueous alkaline earth metal and/or alkali metal hydroxide solutions, characterised in that the hydroxyaryl compound and the alkaline earth metal and/or alkali metal hydroxide are both used in an excess, based on the phosphorus halide compound, an organic solvent being present in such quantities that from 10 to 50% by weight solutions of the neutral phosphoric acid ester are formed, and in that on completion of the reaction the organic phase is separated off and the phosphoric acid ester formed is isolated by removing the solvent.

2. A process according to Claim 1, characterised in that the reaction is carried out at temperatures

between 5 and 95° C.

3. A process according to Claim 1, characterised in that the reaction is carried out at temperatures between 25 and 50° C.

4. A process according to Claims 1 to 3, characterised in that the reaction is carried out with an excess of hydroxyaryl compound of from 0.01 to 4 moles per equivalent of phosphorus compound.

5. A process according to Claims 1 to 4, characterised in that the reaction is carried out with an excess of alkaline earth metal and/or alkali metal hydroxide of from 1.01 to 2 moles per equivalent of phosphorus halogen compound.

6. A process according to Claims 1 to 5, characterised in that phosphorus oxychloride or 2-ethylhexyl phosphoric acid dichloride is used as the phosphoric acid halide.

7. A process according to Claims 1 to 6, characterised in that aqueous sodium hydroxide solution having a concentration of from 10 to 60% by weight is used as the alkali metal hydroxide solution.

8. A process according to Claims 1 to 7, characterised in that toluene, chlorobenzene and/or methylene chloride is used as the organic solvent.

9. A process according to Claims 1 to 8, characterised in that the reaction is carried out continuously in a combination of a loop reactor and a flow tube.

10. Neutral phosphoric acid esters when obtained by the process of Claims 1 to 9.

**Revendications**

1. Procédé de préparation d'esters phosphoriques neutres de formule générale I

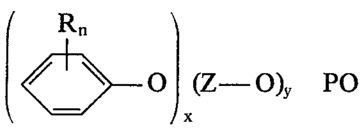

(I)

dans laquelle

R représente un atome d'hydrogène, un groupe alkyle en $C_1-C_{20}$, un groupe alcoxy en $C_1-C_{20}$, un groupe phénoxy, un groupe phényle éventuellement condensé, un système bicyclique aromatique condensé interrompu par un hétéroatome, un groupe nitrile ou atome d'halogène,
n est un nombre entier allant de 1 à 5 et les restes R peuvent être identiques ou différents,
x est un nombre entier de 2 à 3,
Z représente un groupe alkyle en $C_1-C_{20}$ ou un groupe de formule

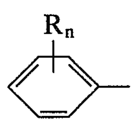

dans laquelle

R et n ont les significations indiquées ci-dessus, et
y est égal à 1 lorsque x est égal à 2 et est égal à 0 lorsque x est égal à 3,

par réaction d'oxyhalogénures de phosphore, de pentahalogénures de phosphore ou de monoesters-dihalogénures de l'acide phosphorique de formule II

$$ZOPOHal_2 \qquad (II)$$

dans laquelle

Z a la signification indiquée ci-dessus et Hal représente Cl et/ou Br, avec des composés hydroxyaryliques de formule générale IV

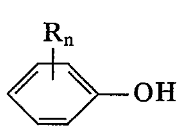

(IV)

dans laquelle R et n ont les significations indiquées ci-dessus, ou leurs mélanges, dans un mélange à deux phases consistant en un solvant organique et une solution aqueuse d'hydroxyde alcalino-terreux

et/ou alcalin, le procédé se caractérisant en ce que, par rapport au composé halogéné du phosphore, on utilise un excès du composé hydroxyarylique et un excès de l'hydroxyde alcalino-terreux et/ou alcalin, on utilise le solvant organique en quantité telle qu'il se forme des solutions à des concentrations de 10 à 50% en poids de l'ester phosphorique neutre et après la réaction on sépare la phase organique et on isole l'ester phosphorique formé par élimination du solvant.

2. Procédé selon la revendication 1, caractérisé en ce que la réaction est effectuée à des températures de 5 à 95° C.

3. Procédé selon la revendication 1, caractérisé en ce que la réaction est effectuée à des températures de 25 à 50° C.

4. Procédé selon les revendications 1 à 3, caractérisé en ce que la réaction est effectuée avec un excès du composé hydroxy-arylique représentant 1,01 à 4 moles par équivalent du composé du phosphore.

5. Procédé selon les revendications 1 à 4, caractérisé en ce que la réaction est effectuée avec un excès de l'hydroxyde alcalino-terreux et/ou alcalin représentant 1,01 à 2 moles par équivalent du composé halogéné du phosphore.

6. Procédé selon les revendications 1 à 5, caractérisé en ce que l'on utilise en tant qu'halogénures de l'acide phosphorique l'oxychlorure de phosphore ou le dichlorure de l'acide 2-éthylhexylphosphorique.

7. Procédé selon les revendications 1 à 6, caractérisé en ce que l'on utilise en tant que solution d'hydroxyde alcalin une solution aqueuse d'hydroxyde de sodium à une concentration de 10 à 60% en poids.

8. Procédé selon les revendications 1 à 7, caractérisé en ce que l'on utilise en tant que solvant organique le toluène, le chlorobenzène et/ou le chlorure de méthylène.

9. Procédé selon les revendications 1 à 8, caractérisé en ce que l'on effectue la réaction en continu dans une combinaison d'un réacteur à circuit et d'un conduit d'écoulement.

10. Esters phosphoriques neutres préparés par un procédé selon les revendications1 à 9.